# FASCICULE DE BREVET EUROPEEN

(11) **EP 2 330 914 B1**
(45) Date de publication et mention de la délivrance du brevet: **28.12.2016**
(21) Numéro de dépôt: 09814146.8
(22) Date de dépôt: 02.02.2009
(51) Int. Cl.: A23L 5/00, A23L 19/00, A23P 10/00

(54) **PROCÉDÉ D'ENROBAGE DE PRODUITS ALIMENTAIRES**
ÜBERZUGSVERFAHREN FÜR LEBENSMITTELPRODUKTE
METHOD FOR COATING FOOD PRODUCTS

(30) Priorité: 22.09.2008 FR 0856351; 14.11.2008 WO PCT/FR2008/052053
(43) Date de publication de la demande: 15.06.2011
(73) Titulaire: XEDA INTERNATIONAL, 13670 Saint-Andiol (FR)
(72) Inventeur: SARDO, Alberto, F-13160 Chateaurenard (FR)
(74) Mandataire: Lavoix
(86) Numéro de dépôt international: PCT/FR2009/050153
(87) Numéro de publication internationale: WO 2010/031929

(56) Documents cités:
- EP-A- 0 795 272
- EP-A- 1 106 070
- FR-A- 2 780 859
- FR-A- 2 786 664
- FR-A- 2 902 294
- FR-A- 2 912 606
- GB-A- 821 277

## Description

Les aliments frais, tels que les fruits et légumes, notamment les agrumes, sont généralement enrobés avant leur commercialisation pour améliorer leur conservation et leur aspect pour le consommateur.

Les résines alimentaires sont notamment utilisées pour l'enrobage des agrumes. Leur utilisation est toutefois limitée en raison de leur faible solubilité dans l'éthanol, solvant accepté sur le plan alimentaire.

La pratique courante est d'appliquer ces résines ou des cires alimentaires par aspersion ou nébulisation au moyen de pistolets. Ainsi, FR 0753308 décrit l'application de compositions de résines et de terpènes sur des fruits ou légumes par aspersion, ladite aspersion étant réalisée au moyen de gicleurs, sous pression, sur des fruits ou légumes placés sur des convoyeurs. Ce mode d'application, ainsi que la nébulisation ou atomisation entraîne la formation d'un brouillard important qui se dépose sur vaste zone du convoyeur, des pièces mécaniques et pollue également l'atmosphère. Après évaporation des solvants, les fines gouttelettes laissent alors un résidu sec de résines qui encrasse le dispositif mécanique.

FR 2 786 664 décrit l'application de compositions comprenant un ester de glycérol de résine de pin ou la gomme de laque, avec de l'eugénol par mise en solution dans l'eau.

FR 2 912 606 décrit une émulsion aqueuse à titre de composition traitante de fruits et légumes.

L'application par aspersion ou nébulisation nécessite une très bonne dissolution des résines dans la composition d'application, de sorte que des additifs sont souvent nécessaires.

Par ailleurs, il a été observé que l'application par aspersion, nébulisation ou atomisation ne permettait pas d'obtenir un enrobage satisfaisant : en effet, l'application sous pression a pour effet d'évaporer partiellement le solvant, de sorte que des particules solides sont appliquées sur les fruits ou légumes en provoquant des amas de résidus solides localisés.

Or, une couverture inhomogène ne permet pas de contrôler convenablement la perte de poids et/ou la respiration des fruits ou légumes.

Enfin, ces systèmes sous pression sont complexes et coûteux.

Il est donc désirable de mettre à disposition un nouveau procédé amélioré d'enrobage des produits alimentaires au moyen de résines ou cires.

Il est décrit un nouveau procédé d'enrobage de produits alimentaires, et permettant d'éviter les problèmes discutés ci-dessus.

L'invention concerne l'utilisation d'une composition d'enrobage pour produits alimentaires, ladite composition étant une solution de gomme laque dans un alcool, ladite composition comprenant:
- entre 1 % et 35 % en poids de gomme laque;
- entre 0 % et 50 % en poids de terpène(s) ;
- entre 15 % et 99 % en poids de solvant choisi parmi les alcools ; et
- entre 0,1 et 10% en poids de base,
pour application de entre 1 et 10 litres de ladite composition par tonne de produits alimentaires, préférentiellement entre 2 et 5 litres/t.

Ainsi, on décrit un procédé d'enrobage des produits alimentaires comprenant l'application sur lesdits produits alimentaires d'une composition comprenant un ou plusieurs agents filmogène dans un solvant, caractérisé en ce que ladite application est réalisée par douchage à pression atmosphérique de ladite composition ou par immersion dans ladite composition.

Avantageusement, ledit solvant est un alcoolléger, notamment un alcool en C2-C3. On peut notamment citer l'éthanol.

L'utilisation d'alcool à titre de solvant est particulièrement avantageuse en ce qu'il possède une activité désinfectante, voire stérilisante du produit alimentaire contre les contaminations présentes à sa surface.

De préférence, lorsque un solvant hydrosoluble, tel que les alcools notamment, est utilisé, il est souhaitable que la composition d'enrobage comprenne en outre une base. En effet, les inventeurs ont démontré qu'en présence d'humidité résiduelle (par exemple condensation d'eau sur les produits alimentaires à traiter, humidité ambiante, etc.), il se produisait une perte de solubilité importante de résine dans ledit solvant hydrosoluble. Cette perte de solubilité provoque ainsi un enrobage de mauvaise qualité, de sorte que les produits alimentaires ainsi traités n'auraient pas l'aspect brillant escompté. De façon inattendue, les inventeurs ont désormais découvert que l'ajout de base dans la composition d'enrobage à base de solvant hydrosoluble permet d'améliorer la solubilité de la résine dans le solvant en présence d'eau, de sorte que l'enrobage présente une qualité satisfaisante, même en présence d'eau.

A titre de base, on peut notamment citer toute base organique ou minérale, telle que l'ammoniaque, la soude, la potasse, les amines, telles que diéthylamine, morpholine.

Généralement, la base est comprise entre 0,1 et 10% en poids de la composition d'enrobage, de préférence entre 0,1 et 5%, plus préférentiellement entre 1 et 5%.

On appelle agent filmogène tout agent apte à former une pellicule comestible perméable ou semi-perméable capable de réduire et/ou empêcher les échanges gazeux dudit produit alimentaire avec l'air ambiant. Ainsi, le(s)dit(s) agent(s) filmogène(s) est(sont) choisi(s) parmi les résines.

La résine peut être choisie parmi la gomme-laque.

La composition d'enrobage peut également comprendre en outre un ou plusieurs terpènes, notamment choisi(s) parmi les terpènes non porteurs d'oxygène, tels que les pinènes et le limonène.

Par produit alimentaire, on entend tout aliment tel que les fruits, légumes, fromages ou oeufs notamment habituellement enrobés pour sa conservation ; on préfère particulièrement les fruits ou légumes.

Selon un premier aspect, ledit agent filmogène est en solution dans un alcool.

Selon un aspect préférentiel, ladite composition est appliquée par douchage à pression atmosphérique de ladite composition sur des produits alimentaires à enrober, disposés sur un convoyeur.

Comme indiqué ci-avant, ledit douchage à pression atmosphérique est effectué sans gicleur, asperseur ou nébulisateur.

Selon l'invention, le douchage peut être efficacement réalisé par le trop-plein du réservoir d'alimentation de la dite composition, par débordement de la composition qui tombe par gravité sur les produits alimentaires situés sur une première zone du convoyeur, sous la zone de débordement, ou encore par égouttement au moyen de perforations dans le réservoir d'alimentation.

De façon avantageuse, le douchage peut être amélioré en disposant des peignes, permettant d'homogénéiser le douchage sur les produits alimentaires.

Après passage par cette première zone, les produits alimentaires douchés sont ensuite amenés par le convoyeur vers une seconde zone sur des moyens de décharge, tels que des bacs de décharge.

A titre de composition, on peut notamment citer les compositions suivantes :
-- gomme-laque et base dans l'alcool éthylique ;
éventuellement en présence de limonène.

Plus précisément, on préfère notamment les compositions suivantes :
- gomme laque : 9%,
- alcool éthylique : 89%,
- ammoniaque : 2%.

Lesdites compositions peuvent également comprendre en outre d'autres solvants, des huiles végétales, des émulsifiants.

De préférence, l'application de la composition est effectuée après récolte et avant la commercialisation des produits alimentaires, à température ambiante. Les compositions selon l'invention peuvent être appliquées une ou plusieurs fois.

De préférence, les compositions sont appliquées sur des produits alimentaires préalablement séchés.

Les pourcentages indiqués ici sont donnés en poids.

Les compositions d'enrobage sont de préférence appliquées pures, sans dilution préalable.

La quantité de composition devant être appliquée dépend de la nature des produits alimentaires concernés et du mode d'application sélectionné. Généralement, on applique entre 1 et 5 litres de la composition par tonne de produits alimentaires, préférentiellement entre 2 et 10 litres/t.

Le solvant des compositions en solution est généralement évaporé à l'air par aspiration suivie d'extraction ou absorption.

A titre de terpènes non porteurs d'oxygènes, on peut citer les pinènes et le limonène, et plus particulièrement le limonène.

L'expression "fruits ou légumes" fait préférentiellement référence au traitement des agrumes, tels que les oranges, citrons, clémentines, pamplemousses, mandarines, ou encore les pommes, ou tout fruit ou légume habituellement enrobé par résine.

Les tensioactifs ou émulsifiants variés sont connus en soi. Selon la présente invention, on entend par "émulsifiant" tout type d'agent habituellement utilisé à cet effet, tels que les alcools gras éthoxylés, les acides gras éthoxylés, les alkylphénols éthoxylés ou tout autre produit non ionique.

Les tensioactifs préférablement utilisés dans le cadre de l'invention sont des tensioactifs anioniques ou non ioniques.

Des exemples de tensioactifs non ioniques utilisables selon l'invention sont notamment le produit de condensation d'un alcool gras aliphatique, de préférence en C₈-C₂₂, avec un oxyde d'alkylène en C₂-C₃. L'oxyde d'alkylène en C₂-C₃ peut être l'oxyde d'éthylène, l'oxyde de propylène, ou bien un mélange d'oxyde d'éthylène et d'oxyde de propylène dans des proportions quelconques. Un exemple de tels tensioactifs est le produit de condensation de l'alcool laurylique (ou alcool n-dodécyclique) avec 30 moles d'oxyde d'éthylène.

Les émulsifiants peuvent également contenir d'autres agents habituellement utilisés dans les cires d'enrobage.

Les émulsifiants non ioniques incluent notamment les sucroesters, les sorbitans monoléate éthoxylés, les acides gras éthoxylés, la lécithine, les acides gras estérifiés tels que l'oléate de glycérol et leurs mélanges.

Des exemples de tensioactifs anioniques utilisables selon l'invention sont notamment : les sels alcalins des acides gras avec base, organique ou minérale, tel que hydroxydes de métal alcalin (soude ou potasse), ammoniaque ou amine(s). Le sel peut-être introduit dans la composition ou formé *in situ.*

L'invention n'est cependant pas limitée à l'utilisation de ces tensioactifs particuliers.

Avantageusement, le procédé de l'invention peut être mis en oeuvre au moyen d'un dispositif pour l'enrobage des produits alimentaires (1) comprenant :
- un convoyeur (2);
- un réservoir d'alimentation (3) de la composition d'enrobage situé au-dessus d'une première zone dudit convoyeur;
- des moyens de séchage (6);
- des moyens de décharge des fruits ou légumes (10); tels que :
   - ledit réservoir d'alimentation (3) de la composition est apte à déverser par débordement ou par égouttement et par gravité, à pression atmosphérique ladite composition d'enrobage sur lesdits produits (1) placés sur une première zone du convoyeur (2a),
   - les moyens de décharge (10) sont aptes à recevoir lesdits produits ainsi enrobés à la sortie du convoyeur (2) dans une seconde zone (2b),

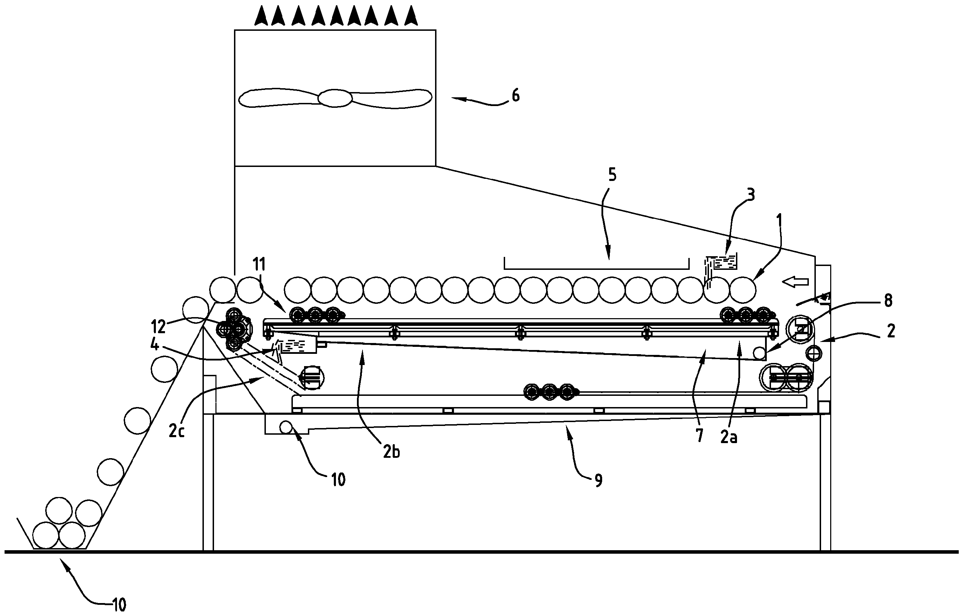

Les chiffres placés entre parenthèses font référence à la figure 1 représentant un dispositif illustratif de la présente invention.

Le dispositif comprend en outre, dans des modes de réalisation préférentiels l'un ou l'autre des moyens suivants ou chacune de leurs combinaisons :
- des moyens de lavage du convoyeur. Ainsi, dans le cas du rinçage du convoyeur par un solvant, le dispositif selon l'invention comprend en outre un réservoir d'alimentation de solvant (4). Dans le cas du lavage par action mécanique, le dispositif peut alors comprendre en outre des brosses mécaniques. Dans le cas du lavage par fusion, le dispositif peut alors comprendre en outre un réservoir d'alimentation d'eau chaude, à température supérieure à la température de fusion des résidus solides issus de la composition d'enrobage déposés sur le convoyeur ; ledit réservoir d'alimentation d'eau chaude peut être similaire au réservoir d'alimentation de solvant présenté ci-dessus ; ou encore des moyens de soufflage d'air chaud, présentant une température supérieure à la température de fusion des résidus solides issus de la composition d'enrobage déposés sur le convoyeur ; et/ou
- ledit réservoir d'alimentation de solvant (4) est apte à contenir le solvant pour laver le convoyeur (2) après la sortie desdits produits du convoyeur. Le dispositif peu alors comprendre, en outre des moyens (9), (10) pour recycler le solvant après lavage du convoyeur vers le réservoir d'alimentation de solvant (4). Ainsi, après douchage du convoyeur (2c) à vide, le solvant s'égoutte et est recueilli sur un plan incliné (9) qui, à son point le plus bas collecte le solvant par gravité. Un système de refoulement de solvant (10), tel qu'une pompe réinjecte alors le solvant vers le réservoir d'alimentation (4) et/ou

- le réservoir d'alimentation de solvant (4) est situé sous le plan incliné (7) ; et/ou
- le réservoir d'alimentation de solvant (4) est apte à déverser par débordement ou par égouttement et par gravité l'alcool sur une troisième zone du convoyeur (2c) ; et/ou
- des moyens pour récupérer les vapeurs de solvant extraites. Ainsi, on peut notamment citer un récipient contenant de l'eau dans lequel on fait passer le solvant extrait. Le solvant est ainsi absorbé par l'eau et n'est pas déchargé dans l'atmosphère ;
- des moyens (5) pour limiter l'évaporation du solvant lors du douchage sur lesdits produits ou peu après leur douchage, lorsqu'ils sont situés dans la première zone (2a) du convoyeur. En effet, il peut être désirable de limiter l'action des moyens d'extraction (6) et ce pour assurer un meilleur enrobage. Ainsi, les moyens (5) peuvent notamment comprendre une plaque, située au-dessus desdits produits de la zone (2a) du convoyeur. La taille de cette plaque dépend notamment du temps nécessaire au séchage de la composition sur lesdits produits, et correspond donc à la distance nécessaire à parcourir par ledit convoyeur ; et/ou
- des moyens de recyclage de ladite composition après douchage desdits produits vers le réservoir d'alimentation de la composition (3). Ainsi, après douchage desdits produits (1) sur le convoyeur (2a), la composition s'égoutte et est recueillie sur un plan incliné (7) qui, à son point le plus bas collecte la composition par gravité. Un système de refoulement de la composition (8), tel qu'une pompe réinjecte alors la composition vers le réservoir d'alimentation (3) ; et/ou
- le convoyeur (2) est préférentiellement un convoyeur à rouleaux (11) se déplaçant dans le sens allant de la première zone (2a), située sous le réservoir d'alimentation de la composition (3), vers une seconde zone (2b), opposée où lesdits produits sont amenés vers un bac de décharge (10) par gravité ; et/ou
- la vitesse d'avancement du convoyeur peut être ajustée en fonction de différents paramètres, tels que le débit desdits produits entrant ou désiré à la sortie, la durée nécessaire du passage desdits produits sur la première zone (2a), sous le déversement de la composition d'enrobage pour obtenir un douchage suffisant et un enrobage satisfaisant. Ainsi, la vitesse d'avancement du convoyeur pet généralement être comprise entre 1 m et 10 m/minute et/ou
- le réservoir d'alimentation de la composition d'enrobage comprend des moyens aptes à distribuer uniformément la composition par débordement et par gravité, sur les produits en zone (2a) ; et/ou
- lesdits moyens aptes à distribuer uniformément la composition par débordement et par gravité, sur les produits en zone (2a) sont des peignes disposés perpendiculairement à la direction de circulation du convoyeur (2) ; et/ou
- lesdits moyens de séchage comprennent un extracteur de vapeurs, aspirateur, souffleur, et/ou un ventilateur et/ou une longueur additionnelle de convoyeur ; et/ou
- des moyens de contrôle automatique de la concentration et/ou du pH de la composition d'enrobage ; et/ou
- lesdits moyens de contrôle automatique de la concentration comprennent un densimètre et un réservoir d'alimentation en composition (3) diluée, tel que lorsque le densimètre indique que la composition d'enrobage présente une densité supérieure à la densité maximum autorisée (c'est-à-dire une composition d'enrobage trop concentrée), une composition d'enrobage diluée (par exemple de densité comprise entre 1/20 à 1/15 de la densité de la composition d'enrobage utilisée) est alors ajoutée dans le réservoir d'alimentation de la composition d'enrobage utilisée, de sorte que la composition d'enrobage résultante du mélange présente une densité convenable, inférieure à la densité maximum autorisée.

Selon un mode de réalisation particulier, le procédé selon l'invention est tel qu'il comprend les étapes consistant à :
- charger lesdits produits (1) sur un convoyeur (2) ;
- doucher à pression atmosphérique lesdits produits (1) situés sur une première zone du convoyeur (2a) par débordement ou égouttement d'une composition d'enrobage, contenue dans un réservoir d'alimentation de ladite composition (3), ledit réservoir étant situé au-dessus de ladite première zone du convoyeur (2a);

- amener par le convoyeur (2) lesdits produits (1) ainsi enrobés dans une seconde zone (2b) vers des moyens de décharge (10) ;
- décharger lesdits produits ainsi enrobés;
et
- sécher lesdits produits ainsi enrobés.

Le procédé peut en outre comprendre l'une ou l'autre des étapes suivantes ou chacune de leurs combinaisons :
- le lavage dans une troisième zone (2c) dudit convoyeur (2) après décharge desdits produits. Ce lavage peut être réalisé par rinçage au moyen de solvant, par débordement ou égouttement de solvant contenu dans un réservoir d'alimentation d'alcool (4), ledit réservoir étant situé au-dessus de ladite troisième zone du convoyeur (2c) ; ou encore par action mécanique, par exemple au moyen de brosses ; ou encore par fusion, par rinçage à l'eau chaude, à température supérieure à la température de fusion des résidus solides issus de la composition d'enrobage déposés sur le convoyeur, ou par soufflage d'air chaud à température supérieure à la température de fusion des résidus solides issus de la composition d'enrobage déposés sur le convoyeur
- le recyclage de solvant après lavage du convoyeur (2) vers le réservoir d'alimentation de solvant (4) : ainsi, après douchage du convoyeur (2c) à vide, le solvant s'égoutte et est recueilli sur un plan incliné (9) qui, à son point le plus bas collecte le solvant par gravité. Le solvant (10) est alors réinjecté, par exemple par une pompe vers le réservoir d'alimentation (4) ; et/ou
- l'extraction de solvant ; et/ou
- la récupération des vapeurs de solvant extraites, par exemple par passage de solvant dans de l'eau ; et/ou
- le recyclage de ladite composition après douchage desdits produits (1) vers le réservoir d'alimentation de la composition (3) : Ainsi, après douchage desdits produits (1) sur le convoyeur (2a), la composition s'égoutte et est recueillie sur un plan incliné (7) qui, à son point le plus bas collecte la composition par gravité. La composition (8) est alors réinjectée, par une pompe notamment, vers le réservoir d'alimentation (3) ; et/ou
- le douchage à pression atmosphérique est réalisé par débordement ou l'égouttement de la composition d'enrobage ; et/ou
- le débordement ou égouttement est distribué uniformément par un système de peignes, disposé perpendiculairement à la direction de circulation du convoyeur ; et/ou
- le contrôle automatique de la densité de la composition d'enrobage et/ou du pH ; et/ou
- l'ajout d'une composition (3) diluée au réservoir d'alimentation de la composition (3) : ainsi, lorsque la composition d'enrobage présente une densité supérieure à la densité maximum autorisée (c'est-à-dire une composition d'enrobage trop concentrée), une composition d'enrobage diluée (par exemple de densité comprise entre 1/20 à 1/15 de la densité de la composition d'enrobage utilisée) est alors ajoutée dans le réservoir d'alimentation de la composition d'enrobage utilisée, de sorte que la composition d'enrobage résultante du mélange présente une densité convenable, inférieure à la densité maximum autorisée; et/ou
- le séchage est réalisé par extraction des vapeurs, aspiration, soufflage, ventilation, et/ou une durée prolongée desdits produits enrobés sur le convoyeur ; et/ou
- la vitesse d'avancement du convoyeur peut être ajustée en fonction de différents paramètres, tels que le débit desdits produits entrant ou désiré à la sortie, la durée nécessaire du passage desdits produits sur la première zone (2a), sous le déversement de la composition d'enrobage pour obtenir un douchage suffisant et un enrobage satisfaisant. Ainsi, la vitesse d'avancement du convoyeur pet généralement être comprise entre 1 m et 10 m/minute.

Les exemples suivants sont donnés à titre illustratif et non limitatif de la présente invention.

### Exemple 1 :

Une solution est préparée sous agitation à partir de 7 g de résine coumaron-indène et 93 g d'hexane. La solution ainsi obtenue est limpide et stable.

### Exemple 2 :

Une solution est préparée sous agitation à partir de 5,5 g de résine abiétate de glycérol, 34,5 g d'alcool éthylique et 10 g de limonène. La solution ainsi obtenue est limpide et stable.

### Exemple 3 :

Une solution est préparée sous agitation à partir de 9 g de résine gomme-laque et 91 g d'alcool éthylique. La solution ainsi obtenue est limpide et stable.

### Exemple 4 (selon l'invention) :

Une solution est préparée sous agitation à partir de 9 g de résine gomme-laque et 89 g d'alcool éthylique et 2 g d'ammoniaque. La solution ainsi obtenue est limpide et stable.

### Exemple 5 (selon l'invention) :

On traite des pommes au moyen du dispositif décrit à la figure 1, en utilisant comme composition d'enrobage la composition des exemples 3 et 4.

Ainsi pour traiter 5000 kg de pommes, on applique 12 L de solution. La composition est déversée par trop plein du réservoir (3) sur les fruits placés sur un convoyeur à rouleaux, se déplaçant à la vitesse de 4 m/minute.

Les fruits ainsi traités présentent un enrobage homogène. La composition est recyclée et le convoyeur est lavé au moyen d'une solution d'éthanol, elle aussi recyclée.

Lorsque les fruits présentent une condensation à leur surface, l'enrobage réalisé avec l'exemple 4 est plus brillant que celui réalisé avec l'exemple 3 qui présente un aspect mat.

### Exemple 6 :

Une émulsion anionique aqueuse de carnauba est préparée avec 18% de carnauba mis en fusion à 100°C et mélangé avec 4% d'acide oléique et 3% d'ammoniaque concentré. 75% d'eau bouillante sont ajoutés sous agitation jusqu'à l'obtention d'une émulsion fluide et translucide ayant un pH d'environ 10. Cette émulsion est appliquée sur des pommes au moyen d'un dispositif décrit à la figure 1 à la dose de 5L d'émulsion par tonne de pommes. Une fois l'émulsion séchée les rouleaux sont nettoyés dans la zone du retour du convoyeur par brossage mécanique.

### Exemple 2 :

Une solution est préparée sous agitation à partir de 5,5 g de résine abiétate de glycérol, 34,5 g d'alcool éthylique et 10 g de limonène. La solution ainsi obtenue est limpide et stable.

### Exemple 3 :

Une solution est préparée sous agitation à partir de 9 g de résine gomme-laque et 91 g d'alcool éthylique. La solution ainsi obtenue est limpide et stable.

### Exemple 4 :

Une solution est préparée sous agitation à partir de 9 g de résine gomme-laque et 89 g d'alcool éthylique et 2 g d'ammoniaque. La solution ainsi obtenue est limpide et stable.

### Exemple 5 :

On traite des pommes au moyen du dispositif décrit à la figure 1, en utilisant comme composition d'enrobage la composition des exemples 3 et 4.

Ainsi pour traiter 5000 kg de pommes, on applique 12 L de solution. La composition est déversée par trop plein du réservoir (3) sur les fruits placés sur un convoyeur à rouleaux, se déplaçant à la vitesse de 4 m/minute.

Les fruits ainsi traités présentent un enrobage homogène. La composition est recyclée et le convoyeur est lavé au moyen d'une solution d'éthanol, elle aussi recyclée.

Lorsque les fruits présentent une condensation à leur surface, l'enrobage réalisé avec l'exemple 4 est plus brillant que celui réalisé avec l'exemple 3 qui présente un aspect mat.

### Exemple 6 :

Une émulsion anionique aqueuse de carnauba est préparée avec 18% de carnauba mis en fusion à 100°C et mélangé avec 4% d'acide oléique et 3% d'ammoniaque concentré. 75% d'eau bouillante sont ajoutés sous agitation jusqu'à l'obtention d'une émulsion fluide et translucide ayant un pH d'environ 10. Cette émulsion est appliquée sur des pommes au moyen d'un dispositif décrit à la figure 1 à la dose de 5L d'émulsion par tonne de pommes. Une fois l'émulsion séchée les rouleaux sont nettoyés dans la zone du retour du convoyeur par brossage mécanique.

## Revendications

1. Utilisation d'une composition d'enrobage pour produits alimentaires ladite composition étant une solution de gomme laque dans un alcool, ladite composition comprenant:
- entre 1 % et 35 % en poids de gomme laque;
- entre 0 % et 50 % en poids de terpène(s) ;
- entre 15 % et 99 % en poids de solvant choisi parmi les alcools ; et
- entre 0,1 et 10% en poids de base,
pour application de entre 1 et 10 litres de ladite composition par tonne de produits alimentaires, préférentiellement entre 2 et 5 litres/t.

2. Utilisation selon la revendication 1 telle que le solvant est l'alcool éthylique ou propylique.

3. Utilisation selon l'une quelconque des revendications précédentes telle que le solvant est l'alcool éthylique.

4. Utilisation selon l'une quelconque des revendications précédentes telle que le(s) terpène(s) est(sont) choisi(s) parmi les pinènes et le limonène.

5. Utilisation selon l'une quelconque des revendications précédentes telle que la base est choisie parmi l'ammoniaque, la soude, la potasse, les amines.

6. Utilisation selon l'une quelconque des revendications précédentes telle que la base est comprise entre 1 % et 5%.

7. Utilisation selon l'une quelconque des revendications précédentes telle que la composition est une composition de gomme laque et de base dans l'alcool éthylique, éventuellement en présence de limonène.

8. Utilisation pour l'enrobage des fruits selon l'une quelconque des revendications précédentes telle que ladite composition comprend :
- 9% en poids de gomme laque ;
- 89% en poids d'alcool éthylique ;
- 2% en poids d'ammoniaque.

## Patentansprüche

1. Verwendung einer Überzugszusammensetzung für Lebensmittelprodukte, wobei die Zusammensetzung eine Schellacklösung in einem Alkohol ist, wobei die Zusammensetzung aufweist:
- zwischen 1 Gew.-% und 35 Gew-% Schellack,
- zwischen 0 Gew-% und 50 Gew-% Terpen(e),
- zwischen 15 Gew-% und 99 Gew-% Lösungsmittel, das aus den Alkoholen ausgewählt wird, und
- zwischen 0,1 Gew-% und 10 Gew-% Base,
für das Anwenden von zwischen 1 und 10 Litern der Zusammensetzung pro Tonne Lebensmittelprodukte, vorzugsweise zwischen 2 und 5 Litern/t.

2. Verwendung gemäß Anspruch 1, wobei das Lösungsmittel Ethylalkohol oder Propylalkohol ist.

3. Verwendung gemäß irgendeinem der vorhergehenden Ansprüche, wobei das Lösungsmittel Ethylalkohol ist.

4. Verwendung gemäß irgendeinem der vorhergehenden Ansprüche, wobei das Terpen (die Terpene) aus Pinenen und Limonen ausgewählt wird (werden).

5. Verwendung gemäß irgendeinem der vorhergehenden Ansprüche, wobei die Base aus Ammoniak, Natron, Kali, Aminen ausgewählt wird.

6. Verwendung gemäß irgendeinem der vorhergehenden Ansprüche, wobei die Base zwischen 1% und 5% vorliegt.

7. Verwendung gemäß irgendeinem der vorhergehenden Ansprüche, wobei die Zusammensetzung eine Zusammensetzung aus Schellack und Base in Ethylalkohol, gegebenenfalls in Anwesenheit von Limonen ist.

8. Verwendung zum Überziehen der Früchte gemäß irgendeinem der vorhergehenden Ansprüche, wobei die Zusammensetzung aufweist:
- 9 Gew-% Schellack,
- 89 Gew-% Ethylalkohol,
- 2 Gew-% Ammoniak.

## Claims

1. Use of a coating composition for food products, said composition being a solution of shellac in an alcohol, said composition comprising :
- between 1% and 35% by weight in shellac;
- between 0 % and 50 % by weight in terpene(s);
- between 15 % and 99 % by weight in a solvent chosen from alcohols; and
- between 0,1 and 10% by weight of base.
for the application of between 1 and 10 litres of said composition per ton of food product, preferably between 2 and 5 liters.

2. The use according to claim 1, where the solvent is ethylic or propylic alcohol.

3. The use according to any one of the foregoing claims, where the solvent is ethylic alcohol.

4. The use according to any one of the foregoing claimswhere said terpene(s) is/are chosen from amongst pinenes and limonene.

5. The use according to anyone of the forgoing claims where the base is chosen from amongst ammonia, soda, potash, and amines.

6. The use according to anyon of the foregoing claims where the base is comprised between 1 and 5%.

7. The use according to anyone of the foregoing claims where the composition is a composition of shellac and base in ethylic alcohol, optionally in presence of limonene.

8. The use according to anyone of the foregoing claims for the coating of fruits where said composition comprises :
- 9% by weight in shellac;
- 89% by weight in ethylic alcohol;
- 2% by weight in ammonia.
